# EUROPÄISCHE PATENTSCHRIFT

(11) **EP 4 004 429 B1**
(45) Veröffentlichungstag und Bekanntmachung des Hinweises auf die Patenterteilung: **17.07.2024**
(21) Anmeldenummer: 20753289.6
(22) Anmeldetag: 22.06.2020
(51) Int. Cl.: F17D 5/02, G08B 21/20, G01M 3/16

(54) **VORRICHTUNG ZUR DETEKTION VON FLÜSSIGKEITEN**
DEVICE FOR DETECTING LIQUIDS
DISPOSITIF DE DÉTECTION DE LIQUIDES

(30) Priorität: 26.07.2019 DE 202019104143 U
(43) Veröffentlichungstag der Anmeldung: 01.06.2022
(73) Patentinhaber: Denios AG, 32549 Bad Oeynhausen (DE)
(72) Erfinder: ROITHER, Andreas, 32130 Enger (DE); LANGE, Ulrich, 59555 Lippstadt (DE); FISCHER, Joachim, 33609 Bielefeld (DE)
(74) Vertreter: Dantz, Jan Henning
(86) Internationale Anmeldenummer: PCT/EP2020/067358
(87) Internationale Veröffentlichungsnummer: WO 2021/018477

(56) Entgegenhaltungen:
- WO-A1-2019/061141
- DE-A1- 102015 119 251
- US-A- 5 202 667
- US-A1- 2018 275 009
- US-B1- 8 970 385

## Beschreibung

Die vorliegende Erfindung betrifft eine Vorrichtung zur Detektion von Flüssigkeiten, insbesondere bei einer Leckage, mit einem Gehäuse und einer an oder in dem Gehäuse angeordneten Leiterplatte, an der ein kapazitiver Sensor mit mindestens einer Elektrode ausgebildet ist, wobei an einem Boden des Gehäuses eine Öffnung ausgebildet ist, die von der Leiterplatte überdeckt ist und die mindestens eine Elektrode des Sensors an einer Unterseite der Leiterplatte im Bereich der Öffnung angeordnet ist.

Die EP 478 950 A2 offenbart eine Vorrichtung zum Erfassen und Melden von Flüssigkeiten, bei der an einer Unterseite eines Gehäuses ein hervorstehendes Elektrodenpaar zur konduktiven Erfassung einer Flüssigkeit vorgesehen ist. Zusätzlich ist eine Sensoreinrichtung zur optischen Erfassung der Flüssigkeit vorgesehen. Die kabelgebundene Vorrichtung ist vergleichsweise aufwändig in der Herstellung, und zudem kann es zu Problemen kommen, wenn eine große Menge an Flüssigkeit unter die Vorrichtung strömt im Hinblick auf die Abdichtung.

In der WO 2006/078105 A1 ist ein kapazitiver Leckagesensor offenbart, bei dem eine Leiterplatte mit dem Sensor in einem Gehäuse angeordnet ist, das nach der Montage der Leiterplatte mit Epoxidharz befüllt wird. Dadurch ist der Sensor von der Umgebung abgekapselt und die Erfassungsungenauigkeit wegen der Störeinflüsse zwischen dem Sensor und der zu detektierenden Flüssigkeit hoch. Gerade bei Flüssigkeiten mit einer niedrigen Dielektrizitätszahl, wie Öl, kann die Erfassung nur ungenau erfolgen.

US 5,202,667 offenbart einen elektrischen Leckagedetektor, bei dem in einem rohrförmigen Gehäuse ein Kondensator angeordnet ist, der an eine Einheit zur Erfassung einer Leckage angeschlossen ist. Weitere Detektoren zur Erfassung einer Leckage zeigen US2018/0275009 und DE 10 2015 119 251.

Weitere Flüssigkeitssensoren im Stand der Technik sind bekannt aus US8970385 und WO2019/061141.

Es ist daher Aufgabe der vorliegenden Erfindung, eine Vorrichtung zur Detektion von Flüssigkeiten zu schaffen, die eine hohe Zuverlässigkeit und Genauigkeit bei der Erfassung besitzt.

Diese Aufgabe wird mit einer Vorrichtung mit den Merkmalen des Anspruches 1 gelöst.

Bei der erfindungsgemäßen Vorrichtung ist an einem Boden eines Gehäuses eine Öffnung ausgebildet, die von der Leiterplatte überdeckt ist, wobei die mindestens eine Elektrode des kapazitiven Sensors an einer Unterseite der Leiterplatte im Bereich der Öffnung angeordnet ist, so dass diese an der Unterseite frei zugänglich ist und mit einer zu detektierenden Flüssigkeit auch benetzt werden kann. Dadurch werden Störeinflüsse des Bodens auf den Sensor eliminiert. Dies erhöht die Genauigkeit und die Zuverlässigkeit bei der Detektion von Flüssigkeiten.

Erfindungsgemäß sind die Leiterplatte und das Gehäuse abgedichtet miteinander verklebt. Dabei ist die Leiterplatte an einer Oberseite des Bodens des Gehäuses angeordnet. Gemäß der beanspruchten Erfindung ist die Leiterplatte in dem Gehäuse oberhalb des Bodens angeordnet und verklebt, so dass auf der Leiterplatte weitere elektronische Bauteile fixiert werden können.

Für eine genaue Erfassung von Flüssigkeiten können an dem Sensor zwei bahnförmige Elektroden vorgesehen sein. Die bahnförmigen Elektroden können beispielsweise spiralförmig angeordnet sein und einen vorbestimmten Erfassungsbereich überdecken. Die von dem Sensor überwachte Fläche kann beispielsweise in einem Bereich zwischen 2 cm² und 20 cm² liegen.

Mit dem kapazitiven Sensor lassen sich vorzugsweise auch Flüssigkeiten mit einer niedrigen Dielektrizitätszahl erfassen, die beispielsweise kleiner 2 ist. Während die Erfassung von Wasser aufgrund der hohen Dielektrizitätszahl einfach ist, lassen sich Öle und andere Flüssigkeiten deutlich schwerer erfassen.

Das Gehäuse ist erfindungsgemäß mit der Leiterplatte wannenförmig ausgebildet und schwimmfähig. Dadurch kann bei schnellem Eintritt einer Flüssigkeit das Gehäuse aufschwimmen und für einen langen Zeitraum Signale abgeben.

An der Oberseite der Leiterplatte sind vorzugsweise eine oder mehrere Batterien zur Stromversorgung und eine Steuerung vorgesehen. Die Steuerung kann dabei mit einem in dem Gehäuse angeordneten akustischen Warnmelder verbunden sein, der bei einer Leckage dauerhaft angeschaltet wird, um akustische Warnsignale abzugeben.

In einer weiteren Ausgestaltung ist ein Boden des Gehäuses und die Leiterplatte durch Fußelemente geneigt zur Horizontalen ausgerichtet, beispielsweise mit einer Neigung zwischen 1° bis 20°, insbesondere 2° bis 10°. Dadurch können bei einem Einströmen von Flüssigkeit Luftblasen entlang der geneigten Fläche am Boden besser entweichen.

An der Leiterplatte kann ferner mindestens ein Leuchtmittel, wie eine LED, für eine Statusanzeige vorgesehen sein, wobei das Licht über einen stabförmigen Lichtleiter zu einem Sichtfenster an einem Deckel geleitet wird. Dadurch lässt sich mit geringem Energieverbrauch eine Statusanzeige realisieren.

Die Vorrichtung ist vorzugsweise in eine Überwachungsanlage eingebunden, wobei die Steuerung über einen Sender und einem Empfänger mit einer Steuerung der Überwachungsanlage kommunizieren kann. Dadurch können eine Vielzahl von Vorrichtungen zur Detektion von Flüssigkeiten miteinander in einer Überwachungsanlage gekoppelt werden. Die Vorrichtung kann insbesondere in einer Auffangwanne für flüssige Gefahrstoffe eingesetzt werden, um etwaige Leckagen zu detektieren.

Die Erfindung wird nachfolgend anhand eines Ausführungsbeispiels mit Bezug auf die beigefügten Zeichnungen näher erläutert. Es zeigen:

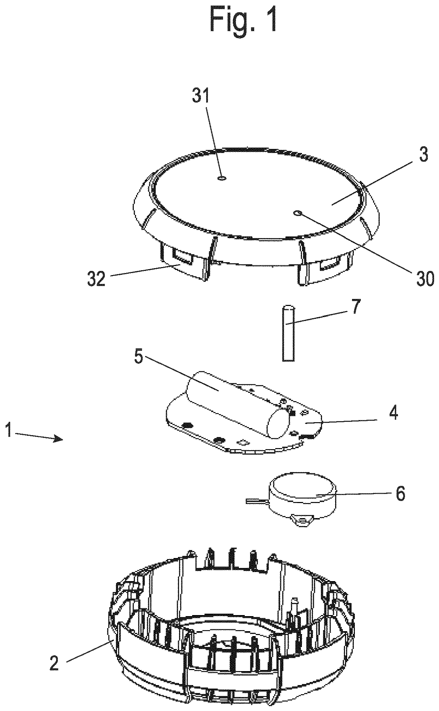

- Figur 1: eine perspektivische Explosionsdarstellung einer erfindungsgemäßen Vorrichtung zur Erfassung von Flüssigkeiten;
- Figuren 2 und 3: zwei Ansichten der Vorrichtung der Figur 1 in einer montierten Position;
- Figuren 4A bis 4C: mehrere Ansichten der Leiterplatte der Vorrichtung der Figur 1, und.
- Figur 5: ein Blockschaltbild der Leiterplatte der Figur 4.

Eine Vorrichtung 1 zur Detektion von Flüssigkeiten umfasst ein wannenförmiges Gehäuse 2, das eine obere Öffnung aufweist, die über einen Deckel 3 verschließbar ist. In dem Gehäuse 2 ist eine Leiterplatte 4 angeordnet, die einen kapazitiven Sensor aufweist, um eine unter das Gehäuse 2 laufende Flüssigkeit im Fall einer Leckage zu erfassen. Hierfür sind an der Leiterplatte 4 an der Unterseite mindestens zwei beabstandete Elektroden aufgebracht, die über eine Steuerung an der Leiterplatte 4 überwacht werden. An der Leiterplatte 4 ist eine Batterie 5 zur Stromversorgung angebracht.

Die Steuerung an der Leiterplatte 4 kann mit einer Überwachungsanlage kommunizieren, die eine Vielzahl von Vorrichtungen 1 gleichzeitig überwachen kann. Hierfür sind entsprechende Sender und Empfänger an der Leiterplatte 4 vorgesehen. In dem Gehäuse 2 ist zudem ist ein akustischer Warnmelder 6 vorgesehen, der bei Detektion einer Leckage akustische Warnsignale ausgibt. Der Warnmelder 6 kann gekapselt ausgebildet sein, um auch bei einem Eintreten von Flüssigkeit in das Gehäuse 2 möglichst lange Warnsignale abgeben zu können.

An der Leiterplatte 4 ist ferner eine LED für eine Statusanzeige vorgesehen, die Licht emittiert, das in einen stabförmigen Lichtleiter 7 eingeleitet wird. Über den stabförmigen Lichtleiter 7 wird das Licht zu einem Sichtfenster 30 an dem Deckel 3 geleitet und ist somit von außen sichtbar. Das Sichtfenster 30 kann dabei durch die Stirnseite des Lichtleiters 7 gebildet sein, so dass die LED an dem Deckel 3 gut sichtbar ist. Zudem ist an dem Deckel 3 ein Betätigungselement 31, insbesondere ein Druckknopf, vorgesehen, mittels dem die Steuerung an der Leiterplatte 4 bedient werden kann, beispielsweise zur Inbetriebnahme der Vorrichtung und zum Starten des Kalibriervorgangs.

An dem Deckel 3 sind integral ausgebildete Rastelemente 32 zur Fixierung des Deckels 3 an dem Gehäuse 2 vorgesehen.

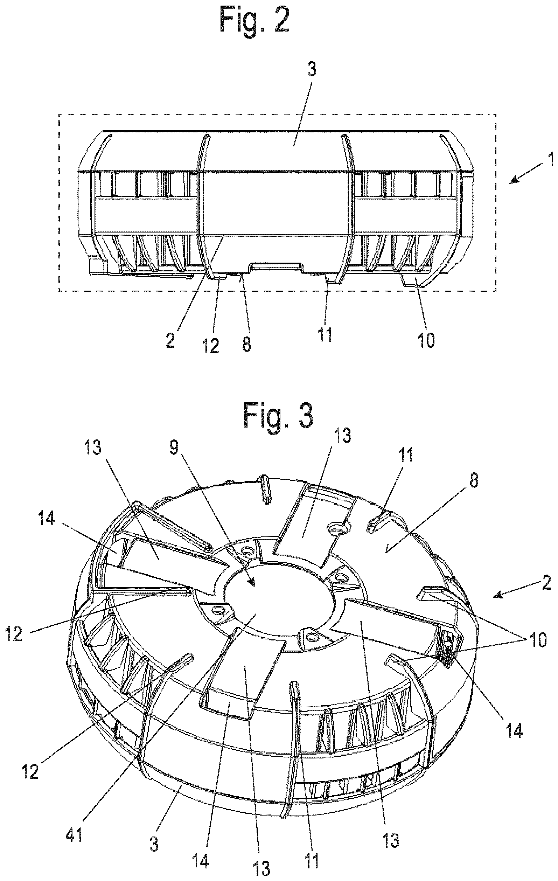

In den Figuren 2 und 3 ist die Vorrichtung 1 in einer montierten Position gezeigt. Das Gehäuse 2 mit dem Deckel 3 umfasst einen Boden 8, der über Fußelemente 10, 11 und 12 beabstandet von einem Untergrund abstellbar ist. Die über den Umfang des Gehäuses 2 verteilten Fußelemente 10, 11 und 12 besitzen dabei eine unterschiedliche Höhe, so dass der Boden 8 bei einem horizontalen ebenen Untergrund geneigt zur Horizontalen ausgerichtet ist, beispielsweise in einem Winkel zwischen 1° bis 20°, insbesondere 2° bis 10°. Hierfür sind die Fußelemente 10 höher ausgebildet als die Fußelemente 11, und die Fußelemente 11 sind höher ausgebildet als die Fußelemente 12. Die Fußelemente 10, 11 und 12 sind stegförmig ausgebildet, können aber auch eine andere Geometrie besitzen.

An dem Boden 8 des Gehäuses 2 ist ferner eine Öffnung 9 ausgespart, die durch die Leiterplatte 4 überdeckt ist. Die Leiterplatte 4 ist dabei abgedichtet mit dem Boden 8 verklebt, so dass über die Öffnung 9 keine Flüssigkeit in das Gehäuse 2 eindringen kann. Im Bereich der Öffnung 9 ist der kapazitive Sensor 41 mit mindestens zwei beabstandet angeordneten Elektroden vorgesehen.

An dem Boden 8 sind nach unten offene Strömungskanäle 13 ausgebildet, durch die Luft abströmen kann, wenn Flüssigkeit unter den Boden 8 strömt. In dem dargestellten Ausführungsbeispiel sind, ausgehend von der mittleren Öffnung 9, vier Strömungskanäle 13 vorgesehen, wobei die Anzahl der Strömungskanäle 13 vom Fachmann frei gewählt werden kann. Die Strömungskanäle 13 münden an einem Entlüftungskanal 14, der in einer gewissen Höhe in dem Gehäuse 2 endet. Das wannenförmige Gehäuse 2 ist mit der verklebten Leiterplatte 4 schwimmfähig und kann bei Ansteigen eines Flüssigkeitspegels somit aufschwimmen.

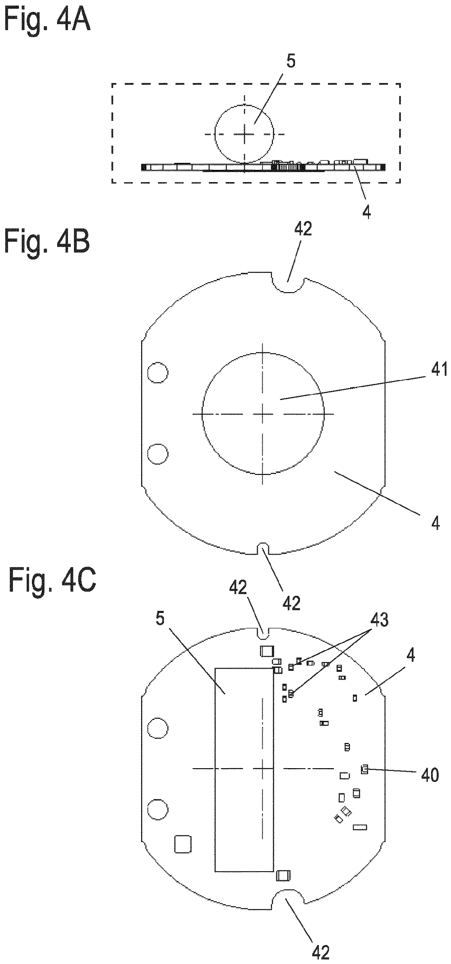

In den Figuren 4A bis 4C ist die Leiterplatte 4 mit der Batterie 5 gezeigt. Die Leiterplatte 4 umfasst ein Leuchtmittel 40 in Form einer LED, die Licht in den stabförmigen Lichtleiter 7 emittiert und somit eine Statusanzeige über das Sichtfenster 30 aussenden kann. An der Leiterplatte 4 ist ferner an der Unterseite der kapazitive Sensor 41 mit den Elektroden vorgesehen, der im Bereich der Öffnung 9 des Gehäuses 2 angeordnet ist. Die Leiterplatte 4 weist ferner Aussparungen 42 zur exakten Positionierung in dem Gehäuse 2 auf. An der Leiterplatte 4 können weitere elektronische Bauteile 43 vorgesehen sein, insbesondere auch Bedienelemente, wie Druckknöpfe, um den Sensor 41 zu kalibrieren. Auf der Leiterplatte 4 kann zudem eine Auswerteelektronik angeordnet sein, die festlegt, bei welchem Zustand eine Warnmeldung ausgegeben wird. Durch die Ausrichtung des Sensors 41 geneigt zur Horizontalen kann bei einem Einströmen von Flüssigkeit zuverlässig eine Benetzung des Sensors ohne Lufteinschlüsse erreicht werden, da die Luft an dem Boden 8 seitlich abströmen kann.

Das Gehäuse 2 und optional auch der Deckel 3 bestehen vorzugsweise aus einem elektrisch leitfähigen Kunststoff, der auch säure- und laugenbeständig ist.

Die Vorrichtung wird beispielsweise in Auffangwannen für den Transport und die Lagerung von flüssigen Gefahrstoffen eingesetzt.

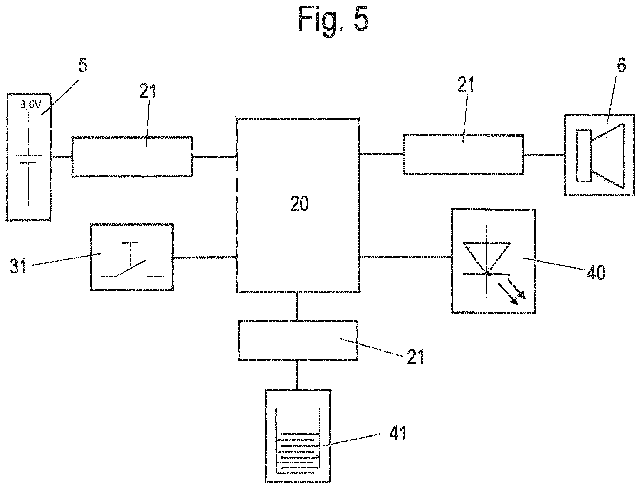

In Figur 5 ist ein Blockschaltbild der Leiterplatte 4 gezeigt. Eine zentrale Steuerung 20 wird über die Batterie 5 mit Strom versorgt, die beispielsweise eine Spannung zwischen 3 bis 4 Volt bereitstellt. Die Batterie 5 ist dabei über einen Strom- und Spannungsbegrenzer 21 mit der Steuerung 20 verbunden. Ferner ist zwischen dem kapazitiven Sensor 41 mit den beiden Elektroden und der Steuerung 20 ebenfalls ein Strom- und Spannungsbegrenzer 21 angeordnet, um Störeinflüsse zu minimieren. Die Steuerung 20 ist über das Betätigungselement 31 bedienbar, das beispielsweise als Taster oder Druckknopf ausgebildet ist. Ferner ist die Steuerung 20 mit dem Leuchtmittel 40 in Form einer LED verbunden, wobei optional auch mehrere LEDs für eine detailliertere Statusanzeige vorgesehen sein können.

In dem Gehäuse 2 ist ferner ein akustischer Warnmelder 6 angeordnet, der optional beabstandet von dem Boden 8 montiert ist, um auch bei einem Einströmen von Flüssigkeit für einen möglichst langen Zeitraum Warnmeldungen abgeben zu können. Der Warnmelder 6 ist über eine Strom- und Spannungsbegrenzung 21 mit der Steuerung 20 verbunden. Der akustische Warnmelder 6 kann dabei gekapselt ausgebildet sein.

Zum Einschalten kann das Betätigungselement 31 für eine gewisse Zeitdauer gedrückt werden, damit ein Kalibriervorgang eingeleitet wird. Während des Kalibriervorganges erfasst die Steuerung 20 die Zustände, Temperatur, Luftfeuchte oder andere Parameter und kann die Schwellwerte zur Auslösung an die jeweilige Umgebung anpassen. Dies ermöglicht einen Einsatz der Vorrichtung 1 in unterschiedlichen Umgebungen, insbesondere in einer Stahlwanne oder einer Kunststoffwanne. Nach der Kalibrierung kann dann die Statusanzeige dem Benutzer die Aktivierung der Vorrichtung 1 anzeigen.

### Bezugszeichenliste

- 1: Vorrichtung
- 2: Gehäuse
- 3: Deckel
- 4: Leiterplatte
- 5: Batterie
- 6: Warnmelder
- 7: Lichtleiter
- 8: Boden
- 9: Öffnung
- 10: Fußelement
- 11: Fußelement
- 12: Fußelement
- 13: Strömungskanal
- 14: Entlüftungskanal
- 20: Steuerung
- 21: Strom- und Spannungsbegrenzer
- 30: Sichtfenster
- 31: Betätigungselement
- 32: Rastelement
- 40: Leuchtmittel
- 41: Sensor
- 42: Aussparung
- 43: Bauteil

## Patentansprüche

1. Vorrichtung (1) zur Detektion von Flüssigkeiten, insbesondere bei einer Leckage, mit einem Gehäuse (2) und einer in dem Gehäuse (2) angeordneten Leiterplatte (4), an der ein kapazitiver Sensor (41) mit mindestens einer Elektrode ausgebildet ist, wobei an einem Boden (8) des Gehäuses (2) eine Öffnung (9) ausgebildet ist, die von der Leiterplatte (4) überdeckt ist und die mindestens eine Elektrode (41) des Sensors an einer Unterseite der Leiterplatte (4) im Bereich der Öffnung (9) angeordnet ist, **dadurch gekennzeichnet, dass** die Leiterplatte (4) und das Gehäuse (2) abgedichtet mit einander verklebt sind, so dass über die Öffnung (9) keine Flüssigkeit in das Gehäuse (2) eindringen kann, und das Gehäuse (2) mit der Leiterplatte (4) wannenförmig ausgebildet und schwimmfähig ist.

2. Vorrichtung nach Anspruch 1, **dadurch gekennzeichnet, dass** an dem Sensor (41) zwei bahnförmige Elektroden vorgesehen sind.

3. Vorrichtung nach Anspruch 2, **dadurch gekennzeichnet, dass** die bahnförmigen Elektroden spiralförmig ausgebildet sind.

4. Vorrichtung nach einem der vorhergehenden Ansprüche, **dadurch gekennzeichnet, dass** durch den kapazitiven Sensor (41) Flüssigkeiten mit einer Dielektrizitätskonstantzahl < 2 detektierbar sind.

5. Vorrichtung nach einem der vorhergehenden Ansprüche, **dadurch gekennzeichnet, dass** an einer Oberseite der Leiterplatte (4) eine Batterie (5) und eine Steuerung (20) fixiert sind.

6. Vorrichtung nach Anspruch 5, **dadurch gekennzeichnet, dass** die Steuerung (20) mit einem in dem Gehäuse (2) angeordneten akustischen Warnmelder (6) verbunden ist.

7. Vorrichtung nach einem der vorhergehenden Ansprüche, **dadurch gekennzeichnet, dass** der Boden (8) des Gehäuses (2) und die Leiterplatte (4) durch Fußelemente (10, 11, 12) geneigt zur Horizontalen ausgerichtet sind, insbesondere in einem Winkel zwischen 1° bis 20°.

8. Vorrichtung nach einem der vorhergehenden Ansprüche, **dadurch gekennzeichnet, dass** ein Taster zum Aktivieren eines Kalibriervorganges vorgesehen ist, bei dem eine Steuerung (20) Umgebungsparameter erfasst und die Schwellwerte zur Auslösung des Sensors (41) festsetzt.

9. Vorrichtung nach einem der vorhergehenden Ansprüche, **dadurch gekennzeichnet, dass** auf der Leiterplatte (4) ein Leuchtmittel (40) für eine Statusanzeige vorgesehen ist, deren Licht über einen stabförmigen Lichtleiter (7) zu einem Sichtfenster (30) an einem Deckel (3) geleitet wird.

10. Vorrichtung nach einem der vorhergehenden Ansprüche, **dadurch gekennzeichnet, dass** die Steuerung einen funktechnischen Sender und einen Empfänger umfasst, mittels der die Steuerung über eine datentechnische Infrastruktur, wie einer Daten-Cloud, kommunizieren kann.

11. Auffangwanne für flüssige Gefahrstoffe, in der eine Vorrichtung nach einem der vorhergehenden Ansprüche angeordnet ist.

## Claims

1. Device (1) for detecting liquids, in particular in the event of a leakage, having a housing (2) and a printed circuit board (4) which is arranged in the housing (2) and on which a capacitive sensor (41) with at least one electrode is formed, wherein an opening (9) which is covered by the printed circuit board (4) is formed on a base (8) of the housing (2), and the at least one electrode (41) of the sensor is arranged on an underside of the printed circuit board (4) in the region of the opening (9), **characterized in that** the printed circuit board (4) and the housing (2) are bonded to one another in a sealed manner, so that no liquid can penetrate into the housing (2) via the opening (9), and the housing (2) is formed with the printed circuit board (4) in the shape of a trough and is buoyant.

2. Device according to claim 1, **characterized in that** two web-shaped electrodes are provided on the sensor (41).

3. Device according to claim 2, **characterized in that** the web-shaped electrodes are of spiral-shaped design.

4. Device according to one of the preceding claims, **characterized in that** liquids with a dielectric constant <2 can be detected by the capacitive sensor (41).

5. Device according to one of the preceding claims, **characterized in that** a battery (5) and a controller (20) are fixed to an upper side of the printed circuit board (4).

6. Device according to claim 5, **characterized in that** the controller (20) is connected to an acoustic warning indicator (6) arranged in the housing (2).

7. Device according to one of the preceding claims, **characterized in that** the base (8) of the housing (2) and the printed circuit board (4) are aligned inclined to the horizontal by foot elements (10, 11, 12), in particular at an angle of between 1° and 20°.

8. Device according to one of the preceding claims, **characterized in that** a button is provided for activating a calibration process, in which a controller (20) detects ambient parameters and sets the threshold values for triggering the sensor (41).

9. Device according to one of the preceding claims, **characterized in that** an illuminant (40) for a status display is provided on the printed circuit board (4), the light of which is guided via a rod-shaped light guide (7) to a viewing window (30) on a cover (3).

10. Device according to one of the preceding claims, **characterized in that** the controller comprises a radio transmitter and a receiver, by means of which the controller can communicate via a data technology infrastructure, such as a data cloud.

11. Collecting trough for liquid hazardous substances, in which a device according to one of the preceding claims is arranged.

## Revendications

1. Dispositif (1) pour la détection de liquides, en particulier lors d'une fuite, avec un boîtier (2) et une carte de circuits (4) disposée dans le boîtier (2), sur laquelle est formé un capteur capacitif (41) muni d'au moins une électrode, dans lequel un fond (8) du boîtier (2) comporte une ouverture (9) qui est couverte par la carte de circuits (4) et l'au moins une électrode (41) du capteur est disposée sur une face inférieure de la carte de circuits (4) dans la région de l'ouverture (9), **caractérisé en ce que** la carte de circuits (4) et le boîtier (2) sont collés l'une à l'autre de façon étanche de sorte qu'aucun liquide ne peut pénétrer dans le boîtier (2) par l'ouverture (9), et le boîtier (2) muni de la carte de circuits (4) est en forme de bac et capable de flotter.

2. Dispositif selon la revendication 1, **caractérisé en ce que** deux électrodes en forme de piste conductrice sont prévues sur le capteur (41).

3. Dispositif selon la revendication 2, **caractérisé en ce que** les électrodes en forme de piste conductrice sont conformées en spirale.

4. Dispositif selon l'une des revendications précédentes, **caractérisé en ce que** le capteur capacitif (41) peut détecter des liquides ayant une constante diélectrique inférieure à 2.

5. Dispositif selon l'une des revendications précédentes, **caractérisé en ce qu'**une pile (5) et une unité de commande (20) sont fixées sur une face supérieure de la carte de circuits (4).

6. Dispositif selon la revendication 5, **caractérisé en ce que** l'unité de commande (20) communique avec un émetteur d'alarme acoustique (6) disposé dans le boîtier (2).

7. Dispositif selon l'une des revendications précédentes, **caractérisé en ce que** le fond (8) du boîtier (2) et la carte de circuits (4) sont inclinés par rapport à l'horizontale par des éléments formant des pieds (10, 11, 12), en particulier selon un angle compris entre 1° et 20°.

8. Dispositif selon l'une des revendications précédentes, **caractérisé en ce qu'**un bouton est prévu pour activer une opération d'étalonnage au cours de laquelle une unité de commande (20) acquiert des paramètres d'environnement et fixe les valeurs de seuil de déclenchement du capteur (41).

9. Dispositif selon l'une des revendications précédentes, **caractérisé en ce qu'**une lampe (40) est prévue sur la carte de circuits (4) pour servir de témoins d'état, dont la lumière est transmise via un guide d'ondes lumineuses (7) en forme de barre jusqu'à une fenêtre (30) d'un couvercle (3).

10. Dispositif selon l'une des revendications précédentes, **caractérisé en ce que** l'unité de commande comprend un émetteur de radio et un récepteur au moyen desquels l'unité de commande peut communiquer avec une infrastructure de données telle qu'un nuage de données.

11. Bac collecteur pour matières dangereuses liquides, dans lequel est disposé un dispositif selon l'une des revendications précédentes.
